# EUROPÄISCHE PATENTSCHRIFT

(11) **EP 2 847 065 B1**
(45) Veröffentlichungstag und Bekanntmachung des Hinweises auf die Patenterteilung: **15.02.2017**
(21) Anmeldenummer: 13720424.4
(22) Anmeldetag: 07.05.2013
(51) Int. Cl.: B62D 65/18, B23K 37/047

(54) **BEARBEITUNGSANLAGE FÜR BAUEINHEITEN**
PROCESSING SYSTEM FOR CONSTRUCTION UNITS
INSTALLATION D'USINAGE POUR UNITÉS DE CONSTRUCTION

(30) Priorität: 09.05.2012 DE 102012009061
(43) Veröffentlichungstag der Anmeldung: 18.03.2015
(73) Patentinhaber: ThyssenKrupp System Engineering GmbH, 74076 Heilbronn (DE)
(72) Erfinder: NEUBERT, Janko, 09337 Hohenstein-Ernstthal (DE); RICHTER, Thomas, 09113 Chemnitz (DE); PÄTZ, Roy, 08112 Wilkau Haßlau/OT Silberstraße (DE); LIST, Eberhard, 09355 Gersdorf (DE); BOROWSKI, Jörg, 08060 Zwickau (DE)
(74) Vertreter: ThyssenKrupp Intellectual Property GmbH
(86) Internationale Anmeldenummer: PCT/EP2013/059454
(87) Internationale Veröffentlichungsnummer: WO 2013/167571

(56) Entgegenhaltungen:
- EP-A1- 2 279 929
- WO-A1-01/64384
- CA-A1- 2 358 279
- US-A- 5 500 507

## Beschreibung

### Stand der Technik

Die vorliegende Erfindung geht aus von einer Bearbeitungsanlage für Baueinheiten, insbesondere Fahrzeugkarosserien, nach dem Oberbegriff des Anspruchs 1.

Solche Bearbeitungsanlagen sind aus dem Stand der Technik allgemein bekannt. Beispielsweise ist aus der Druckschrift EP 1 686 048 B1 ein System zum Verschweißen von Fahrzeugkarosserien bekannt, welches eine Schweißstation zum Schweißen der Karosserien und eine Förderlinie zum Fördern von Karosserien durch die Schweißstation aufweist. Zum Positionieren der Karosserien während des Schweißens werden Spannrahmen verwendet. Die Spannrahmen sind auf den zu schweißenden Karosserietyp jeweils individuell angepasst und umfassen entsprechende Einstell- und Verriegelungseinrichtungen zum Halten und Verriegeln der in die Schweißstation einfahrenden und noch ungeschweißten Karosserien in der richtigen Schweißposition. Um in dem System verschiedene Karosserietypen bearbeiten zu können, ist die Schweißstation mit verschiedenen Spannrahmen zu bestücken. Die Spannrahmen sind hierfür zwischen Arbeitspositionen und Speicherpositionen verfahrbar. Wenn in der Förderlinie eine Karosserie in die Schweißstation gefördert wird, welche einen anderen Spannrahmen erfordert, wird der aktuell in der Schweißstation befindliche Spannrahmen in die Speicherposition verfahren und der für die betreffende Karosserie passende Spannrahmen aus der Speicherposition in die Arbeitsposition verfahren. Die Spannrahmen werden hierfür in Bodenschienen verschiebbar geführt.

Eine Bearbeitungsanlage gemäß dem Oberbegriff des Patentanspruchs 1 ist ferner aus der US 5 500 507 A bekannt.

### Offenbarung der Erfindung

Es ist eine Aufgabe der vorliegenden Erfindung, eine Bearbeitungsanlage für Baueinheiten, insbesondere Fahrzeugkarosserien, zur Verfügung zu stellen, welche im Vergleich zum Stand der Technik zuverlässiger, schneller und präziser arbeitet. Ferner soll die Bearbeitungsanlage kostengünstiger herstellbar und einfacher aufgebaut sein, sowie insgesamt einen kleineren Raum- bzw. Flächenbedarf aufweisen.

Gelöst wird diese Aufgabe mit einer Bearbeitungsanlage für Baueinheiten, welche die Merkmale des Patentanspruchs 1 aufweist.

Die erfindungsgemäße Vorrichtung hat gegenüber dem Stand der Technik den Vorteil, dass zwei voneinander unabhängige Transportsysteme realisiert sind, wobei mittels einer Übergabeeinheit eine Übergabe der Bearbeitungsrahmen zwischen den beiden Transportsystemen und eine Entkopplung der beiden Transportsysteme voneinander erfolgt. Das erste Transportsystem dient zum Transport des Bearbeitungsrahmens zwischen der Übergabeposition und der Arbeitsposition. In der Arbeitsposition muss der Bearbeitungsrahmen mit hoher Genauigkeit positioniert sein, damit die Baueinheiten mit hoher Präzision und Qualität bearbeitet werden können. Hingegen dient das zweite Transportsystem lediglich zum Transport der Bearbeitungsrahmen zwischen der Übergabeposition und den Nichtgebrauchspositionen (auch als Speicherpositionen bezeichnet), so dass hier keine derart hohen Genauigkeiten einzuhalten sind. Aufgrund der mittels der Übergabeeinheit erzielten Entkopplung zwischen dem ersten und dem zweiten Transportsystem können verschiedene Toleranzgrenzen für das erste und zweite Transportsystem realisiert werden, so dass beim ersten Transportsystem eine höhere Positionstreue und niedrigere Toleranzgrenzen realisierbar sind und gleichzeitig eine niedrigere Genauigkeit beim zweiten Transportsystem zu verwirklichen ist. Vorteilhafterweise ist somit eine höhere Präzision beim Bearbeiten der Baueinheiten und gleichzeitig eine höhere Geschwindigkeit beim Auswechseln der Bearbeitungsrahmen zu erzielen. Darüber hinaus kann das zweite Transportsystem einfacher ausgeführt werden und ist somit kostengünstiger herstellbar. Die Baueinheiten werden insbesondere in einer Förderlinie durch die Bearbeitungsstation geführt. Die Vorrichtung weist vorzugsweise wenigstens ein Bearbeitungswerkzeug zum Bearbeiten der mit dem Bearbeitungsrahmen in Eingriff befindlichen Baueinheit auf. Das Bearbeitungswerkzeug kann beispielsweise einen Schweißroboter umfassen.

In einer bevorzugten Ausführungsform ist es vorgesehen, dass in der Bearbeitungsstation von jeder Seite ein Bearbeitungsrahmen seitlich der Fahrzeugkarosserie angeordnet ist und mittels eines ersten Transportsystems senkrecht zur Förderrichtung derart auf die Fahrzeugkarosserie zubewegbar ist, dass die beiden Bearbeitungsrahmen oder auf den Bearbeitungsrahmen angeordnete Werkzeuge in Eingriff mit der Fahrzeugkarosserie bringbar sind.

In einer weiteren bevorzugten Ausführungsform ist es vorgesehen, dass die Bewegung des ersten Transportsystems und des zweiten Transportsystems senkrecht zu einer Förderrichtung erfolgt, d. h. senkrecht zu einer Richtung entlang der die Fahrzeugkarosserie gefördert bzw. von der Bearbeitungsstation bewegt wird. Dabei ist es vorgesehen, dass das erste Transportsystem in einer horizontal senkrecht zur Förderrichtung verlaufenden Richtung (, d. h in der Regel in einer parallel zur Haupterstreckungsebene der Bearbeitungsstation verlaufenden Richtung) den Bearbeitungsrahmen bewegt, während das zweite Transportsystem den Bearbeitungsrahmen in einer vertikal senkrecht zur Förderrichtung verlaufenden Richtung (, d. h in der Regel in einer senkrecht zur Haupterstreckungsebene der Bearbeitungsstation verlaufenden Richtung) bewegt. Es ist dabei vorgesehen, dass die Bewegung des ersten und des zweiten Transportsystems zueinander senkrecht verlaufen. Insbesondere ist es vorgesehen dass das zweite Transportsystem derart ausgebildet ist, dass für die vertikal senkrechte verlaufende Bewegung des zweiten Transportsystems kein zusätzlicher Platz in vertikaler Richtung erforderlich ist, wodurch in vorteilhafter Weise eine besonders kompakte Bearbeitungsstation realisiert werden kann.

Gemäß der Erfindung ist vorgesehen, dass das erste und/oder zweite Transportsystem ein Hängeschienensystem umfasst, an welchem der Bearbeitungsrahmen hängend und verschiebbar befestigt ist.

In vorteilhafter Weise werden durch die Verwendung des Hängeschienensystems die Sicherheit und die Zuverlässigkeit der Bearbeitungsanlage im Vergleich zum Stand der Technik deutlich erhöht, da die Bearbeitungsrahmen durch ihr Eigengewicht stets senkrecht an den Hängeschienen des Hängeschienensystems hängen. Insbesondere wird somit die Gefahr, dass die Bearbeitungsrahmen beim Beschleunigen, beim Aufstoppen und/oder bei einem versehentlichen Kontakt mit einem Bauteil oder Werkzeug umfallen ausgeräumt. Die Sicherheit und Zuverlässigkeit der Bearbeitungsanlage wird somit erhöht. Die bevorzugte Ständerbauweise der Bearbeitungsanlage minimiert ferner die benötigte Grundfläche (auch als Layoutfläche bezeichnet), so dass beispielsweise Bearbeitungswerkzeuge, vorzugsweise Schweißroboter, leichter bzw. in höherer Anzahl auf dem Boden angeordnet werden können.

Vorteilhafte Ausgestaltungen und Weiterbildungen der Erfindung sind den Unteransprüchen, sowie der Beschreibung unter Bezugnahme auf die Zeichnungen entnehmbar.

Gemäß der vorliegenden Erfindung ist vorgesehen, dass das zweite Transportsystem eine erste Hängeschiene des Hängeschienensystems aufweist, wobei der Bearbeitungsrahmen längsverschieblich und austauschbar an der ersten Hängeschiene aufgehängt ist, wobei mittels des ersten Transportsystems die erste Hängeschiene zwischen einer Arbeitsposition, in welcher der Bearbeitungsrahmen in der Gebrauchsposition angeordnet ist, und einer Ladeposition, in welcher die Hängeschiene mit einem Bearbeitungsrahmen zu beladen oder zu entladen ist, bewegbar ist. Vorteilhafterweise wird mittels des ersten Transportsystems die erste Hängeschiene des zweiten Transportsystems in die Ladeposition gebracht, so dass der mit der ersten Hängeschiene gekoppelte Bearbeitungsrahmen automatisch in der Übergabeposition angeordnet wird. Die erste Hängeschiene kann nun mit einem anderen Bearbeitungsrahmen beladen werden. Anschließend wird die erste Hängeschiene wieder in die Arbeitsposition gebracht, wobei hier eine Übergabe des Bearbeitungsrahmens von dem zweiten Transportsystem an das erste Transportsystem derart erfolgt, dass die Position des Bearbeitungsrahmens durch das erste Transportsystem bestimmt wird und nicht länger durch das zweite Transportsystem bzw. die erste Hängeschiene. Ferner ist die Bearbeitungsanlage derart ausgebildet, dass eine Übergabe des Bearbeitungsrahmens von dem zweiten Transportsystem an das erste Transportsystem derart erfolgt, dass in der Arbeitsposition die Position des Bearbeitungsrahmens durch das erste Transportsystem bestimmt wird. Denkbar ist, dass der Bearbeitungsrahmen in der Arbeitsposition zwar mittelbar mit der ersten Hängeschiene gekoppelt bleibt, aber dass die genaue Position des Bearbeitungsrahmens in der Gebrauchsposition allein durch Auflagen des ersten Transportsystems definiert wird, auf welchen der Bearbeitungsrahmen bzw. eine Halterung des Bearbeitungsrahmens mittels der Übergabeeinheit zuvor angeordnet wird.

Gemäß einer bevorzugten Ausführungsform der vorliegenden Erfindung ist vorgesehen, dass das erste Transportsystem wenigstens zwei zur ersten Hängeschiene senkrecht verlaufende Laufschienen umfasst, an welchen die erste Hängeschiene in einer zu den Laufschienen parallelen Richtung verschiebbar aufgehängt ist. In vorteilhafter Weise wird somit die erste Hängeschiene beim Verfahren des Bearbeitungsrahmens zwischen der Übergabeposition und der Gebrauchsposition mitbewegt. Die Kopplung zwischen der ersten Hängeschiene und dem Bearbeitungsrahmen kann somit zumindest mittelbar aufrecht erhalten werden. Die Übergabe vom ersten Transportsystem zum zweiten Transportsystem ist somit vergleichsweise einfach mittels der Übergabeeinheit durchführbar. Vorzugsweise ist die erste Hängeschiene mittels der Übergabeeinheit an den wenigstens zwei Laufschienen aufgehängt, wobei die erste Hängeschiene mittels der Übergabeeinheit entlang einer vertikalen Richtung bewegbar ist. In vorteilhafter Weise gelangt der Bearbeitungsrahmen bzw. die Halterung des Bearbeitungsrahmens durch ein einfaches Absenken der ersten Hängeschiene mittels der Übergabeeinheit in einen formschlüssigen Kontakt mit den Auflagen. Die feste Kopplung des Bearbeitungsrahmens bzw. der Halterung an der ersten Hängeschiene wird durch das Absenken ferner aufgehoben. Übergabeeinheit umfasst vorzugsweise wenigstens eine Hubeinheit, an welcher die erste Hängeschiene befestigt ist, wobei der Befestigungsrahmen oder eine Halterung des Befestigungsrahmens durch eine entsprechende Betätigung der Hubeinheit in Kontakt oder außer Kontakt mit einer Aufnahme des ersten Transportsystems zu bringen ist. Die Hubeinheit umfasst vorzugsweise einen drehbaren Nocken, an welchem die erste Hängeschiene befestigt ist, wobei der Befestigungsrahmen oder eine Halterung des Befestigungsrahmens durch eine entsprechende Drehung des Nockens in Kontakt oder außer Kontakt mit einer Aufnahme des ersten Transportsystems zu bringen ist. Durch eine Drehung des Nockens wird der Bearbeitungsrahmen bzw. die Halterung in das Bezugssystem des ersten Transportsystems eingekoppelt. Denkbar ist, dass die Bearbeitungsanlage Positioniermittel aufweist, welche beim Absenken des Bearbeitungsrahmens bzw. der Halterung eine automatische Ausrichtung des Bearbeitungsrahmens bzw. der Halterung, insbesondere unter Ausnutzung der Eigenmasse des Bearbeitungsrahmens, bewirken. Derartige Positioniermittel können beispielsweise entsprechende Kulissenführungen oder justierbare Federelemente umfassen. Beim Anheben der ersten Hängeschiene wird der Bearbeitungsrahmen bzw. die Halterung von den Auflagen abgehoben und somit aus dem Bezugssystem des ersten Transportsystems wieder ausgekoppelt. Vorzugsweise umfasst das erste Transportsystem wenigstens einen, dessen Ende verschiebbar in den Laufschienen geführt sind, wobei der Querträger in vertikaler Richtung zum Bearbeitungsrahmen vorstehende Holmenpaare aufweist, an welchen Aufnahmen für eine Halterung des Befestigungsrahmens ausgebildet sind, wobei die erste Hängeschiene parallel zum Querträger zwischen den Holmenpaaren verlaufend angeordnet ist. Insbesondere ist vorgesehen, dass das erste Transportsystem zwei Querträger aufweist, welcher mit hoher Präzision in den Längsschienen geführt sind, um den Bearbeitungsrahmen an die zu bearbeitenden Baueinheiten heranzufahren. Die Nocken sind vorzugsweise zwischen den beiden Querträgern und gegenüber den Querträgern mittels eines Antriebs drehbar angeordnet.

Gemäß einer bevorzugten Ausführungsform der vorliegenden Erfindung ist vorgesehen, dass die Bearbeitungsanlage ein Speichersystem zur Aufnahme von Bearbeitungsrahmen in Nichtgebrauchspositionen aufweist, wobei das Speichersystem wenigstens eine zweite Hängeschiene umfasst und wobei die erste Hängeschiene in der Ladeposition mittels der Übergabeeinheit in Flucht mit der zweiten Hängeschiene bringbar ist, wenn der Befestigungsrahmen oder die Halterung außer Kontakt mit der Aufnahme des ersten Transportsystems gebracht ist, wobei in der fluchtenden Position der Bearbeitungsrahmen von der ersten Hängeschiene auf die zweite Hängeschiene oder von der zweiten Hängeschiene auf die erste Hängeschiene verschiebbar ist. In vorteilhafter Weise ist der an der ersten Hängeschiene hängende Bearbeitungsrahmen beliebig austauschbar, so dass in der Bearbeitungsstation unterschiedlichste Typen von Baueinheiten zu bearbeiten sind. Vorzugsweise ist es vorgesehen, dass das erste Transportsystem derart ausgebildet ist, dass der Bearbeitungsrahmen an der ersten Hängeschiene angeordnet bleibt, wenn sich der Bearbeitungsrahmen in der Arbeitsposition befindet. Auf diese Weise wird in vorteilhafter Weise verhindert, dass durch eine weitere Übergabe an die Bearbeitungsstation unnötig Zeit verloren geht, und es wird auf ein weiteres Übergabemittel verzichtet. Wenn auf der Förderlinie ein bestimmter Typ einer Baueinheit in die Bearbeitungsstation einfährt, wird aus dem Speichersystem der entsprechende Bearbeitungsrahmen geholt und der Bearbeitungsstation zugeführt. Insbesondere ist vorgesehen, dass das Speichersystem dritte Hängeschienen umfasst, wobei die zweite Hängeschiene und/oder die dritten Hängeschienen senkrecht zu ihren axialen Erstreckungsrichtungen derart bewegbar sind, dass die zweite Hängeschiene wahlweise in Flucht mit jeder der dritten Hängeschienen zu bringen ist. Vorteilhafterweise ist das Speichersystem in besonders einfacher Weise modular erweiterbar, da lediglich weitere Schienen in Flucht mit einer der ersten, zweiten und/oder dritten Hängeschienen gebracht werden müssen. Die Bearbeitungsrahmen sind insbesondere über die Halterung an den Hängeschienen verschiebbar befestigt, wobei die Halterung durch einen Antrieb auf den Hängeschienen verfahrbar ist, um die Befestigungsrahmen von einer Hängeschiene zu einer anderen Hängeschiene zu bewegen. Die Halterung ist vorzugsweise als eine am Hängeschienensystem beweglich aufgehängte Laufkatze ausgebildet, welche durch den Antrieb entlang der Hängeschienen verschiebbar ist.

In einer bevorzugten Ausführungsform umfasst die Bearbeitungsanlage ein Speichersystem, das sich im Wesentlichen auf derselben Höhe befindet wie die Bearbeitungsstation. Durch eine solche Anordnung lassen sich das erste und das zweite Transportsystem derart anordnen, dass die Bearbeitungsanlage in vorteilhafter Weise auch in flachen Fertigungsanlagen eingebaut werden kann.
Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figuren 1, 2, 3 und 4**: zeigen schematische Gesamtansichten einer Bearbeitungsanlage gemäß einer beispielhaften ersten Ausführungsform der vorliegenden Erfindung.
- **Figur 5**: zeigt eine schematische Gesamtansicht einer Bearbeitungsanlage gemäß einer beispielhaften zweiten Ausführungsform der vorliegenden Erfindung.
- **Figuren 6 und 7**: zeigen schematische Detailansichten der Bearbeitungsanlage gemäß der beispielhaften ersten Ausführungsform der vorliegenden Erfindung.
- **Figuren 8 und 9**: zeigen schematische Ansichten einer ersten Hängeschiene der Bearbeitungsanlage gemäß der beispielhaften ersten Ausführungsform der vorliegenden Erfindung.
- **Figuren 10a und 10b**: zeigen schematische Detailansichten der Holme, Halterungen und Positioniermittel der Bearbeitungsanlage gemäß der beispielhaften ersten Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

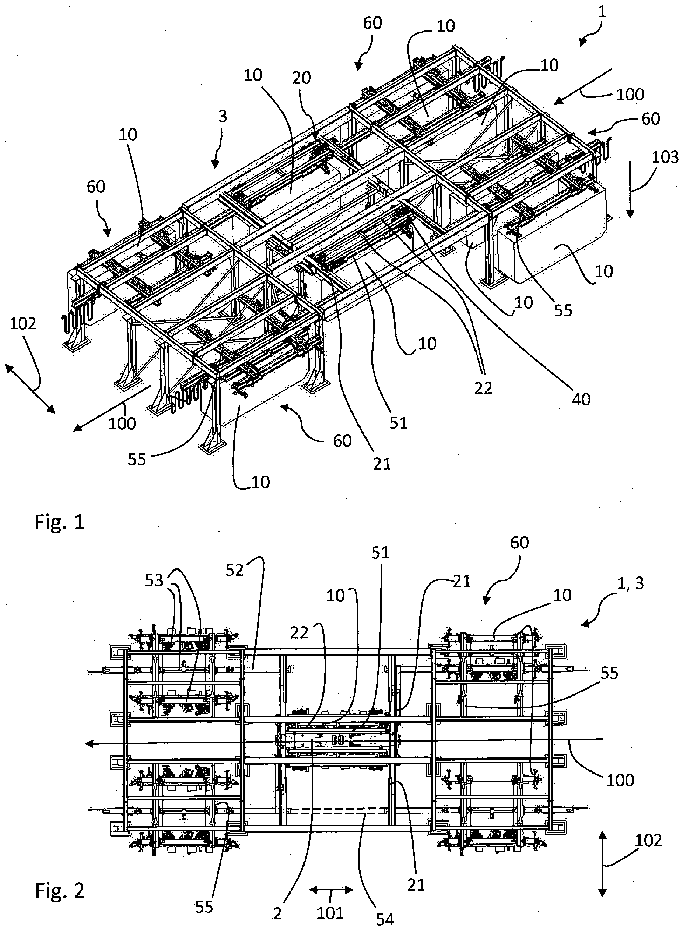

In **Figuren 1, 2****,** **3 und 4** sind schematische Gesamtansichten einer Bearbeitungsanlage 1 gemäß einer beispielhaften ersten Ausführungsform der vorliegenden Erfindung dargestellt. Die Bearbeitungsanlage 1 umfasst eine Förderlinie 100 zur Förderung von Baueinheiten 2, welche im vorliegenden Beispiel Fahrzeugkarosserien 2 umfassen. Die Fahrzeugkarosserien 2 werden entlang einer Förderrichtung 101 der Förderlinie 100 mittels nicht näher dargestellter Fördermittel transportiert. Die Bearbeitungsanlage 1 weist ferner eine Bearbeitungsstation 3 auf, welche von den Fahrzeugkarosserien 2 durchlaufen wird. Die Bearbeitungsstation 3 dient zur Bearbeitung der Fahrzeugkarosserien 2. Im vorliegenden Beispiel umfasst die Bearbeitungsstation 3 eine Schweißstation. In der Scheißstation werden die nur vorgefügten Fahrzeugkarosserien 2 verschweißt. Zur Ausrichtung und Halterung der gerade in der Bearbeitungsstation 3 befindlichen Fahrzeugkarosserie 2 während des Schweißvorgangs finden Bearbeitungsrahmen 10 Verwendung, die individuell auf das Design und die Geometrie der zu schweißenden Fahrzeugkarosserien 2 angepasst ist. Die Bearbeitungsrahmen 10 sind dabei mit einer Vielzahl von Komponenten 70 versehen. Hierfür wird in der Bearbeitungsstation 3 von jeder Seite ein Bearbeitungsrahmen 10 seitlich der Fahrzeugkarossiere 2 angeordnet und mittels eines ersten Transportsystems 20 senkrecht zur Förderrichtung 101 derart auf die Fahrzeugkarosserie 2 zubewegt, dass die beiden Bearbeitungsrahmen 10 oder auf den Bearbeitungsrahmen 10 angeordnete Werkzeuge in Eingriff mit der Fahrzeugkarosserie 2 gelangen. Die Bearbeitungsrahmen 10 befinden sich dann in einer Gebrauchsposition, in welcher die Fahrzeugkarosserie 2 zwischen den beiden Bearbeitungsrahmen 10 fixiert wird. In diesem Zustand werden nun Bearbeitungswerkzeuge 4 zum Bearbeiten der fixierten Fahrzeugkarosserie 2 über Bodenschienen 6 an die fixierte Fahrzeugkarosserie 2 herangefahren, um die Fahrzeugkarosserie 2 zu bearbeiten. Im vorliegenden Beispiel umfassen die Bearbeitungswerkzeuge 4 Schweißroboter, welche die Fahrzeugkarosserie 2 zusammenschweißen. Nach dem Verschweißen werden die Bearbeitungswerkzeuge 4 zurückgefahren und die Fixierung der Fahrzeugkarosserie 2 aufgehoben, so dass die geschweißte Fahrzeugkarosserie 2 die Bearbeitungsstation 3 entlang der Förderlinie 100 verlassen kann und eine neue, noch nicht mit der Bearbeitungsstation 3 bearbeitete Fahrzeugkarosserie 2 in die Bearbeitungsstation 2 gefahren werden kann.

Die Bearbeitungsrahmen 10 sind jeweils individuell an den Karosserietyp angepasst. Um verschiedene Karosserietypen durch die Förderlinie 100 zu fördern und mit der Bearbeitungsstation bearbeiten zu lassen, werden daher verschiedene Bearbeitungsrahmen 10 benötigt, mit welchen die Bearbeitungsstation 3 je nach Bedarf automatisch bestückt werden kann. Die Bearbeitungsanlage 1 weist hierfür ein Speichersystem 60 auf, in welchem nicht benötigte Bearbeitungsrahmen 10 zeitweise abgelegt werden. Wenn ein Karosserietyp in die Bearbeitungsstation 3 gefahren wird, der einen anderen Bearbeitungsrahmen 10 benötigt, wird der entsprechende Bearbeitungsrahmen 10 aus dem Speichersystem 60 in die Bearbeitungsstation 1 geladen. Das Speichersystem 60 ist insbesondere modular erweiterbar, um die maximal mögliche Anzahl von unterschiedlichen Karosserietypen in einer Förderlinie 100 bei Bedarf erhöhen zu können.

Um einen Austausch von Bearbeitungsrahmen 10 zwischen der Bearbeitungsstation 3 und dem Speichersystem 60 durchzuführen, weist die Bearbeitungsanlage 1 neben dem ersten Transportsystem 20, noch ein zweites Transportsystem 30 auf. Die Bearbeitungsrahmen 10 werden jeweils an ihrem oberen Randbereich von einer Halterung 11 gehalten. Diese Halterung 11 ist mit dem jeweiligen Befestigungsrahmen 10 verschraubt, vernietet und/oder verschweißt. Die Halterung 11 ist jeweils in Form einer Laufkatze ausgebildet und weist jeweils eine Mehrzahl von Rollen 12 auf, welche in Hängeschienen 51, 52, 53 eines Hängeschienensystems 50 des zweiten Transportsystems 30 laufen. Die Hängeschienen 51, 52, 53 umfassen insbesondere Doppel-T-Träger, vorzugsweise mit einem inneren Hohlprofil, wobei die Rollen 12 beidseitig auf den horizontalen Flanken der T-Träger abrollen. Auf diese Weise können die Halterungen 11 und somit auch die gehaltenen Befestigungsrahmen 10 in Längsrichtung der sich parallel zur Förderrichtung 101 erstreckenden Hängeschienen 51, 52, 53 verfahren werden. Die Befestigungsrahmen 10 hängen aufgrund ihres Eigengewichts stets in vertikaler Richtung 103 von den Halterungen 11 herab.

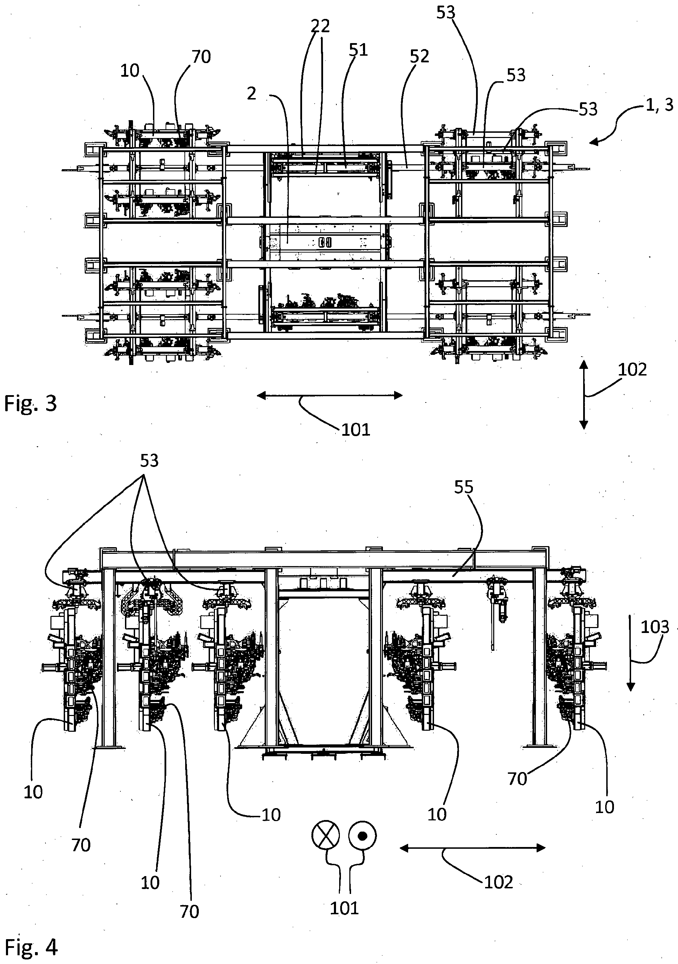

Das erste Transportsystem 20 weist zwei parallel zueinander verlaufende Laufschienen 21 auf, welche sich in einer zur Förderrichtung 101 senkrechten Querrichtung 102 erstrecken. In den beiden Laufschienen 21 sind die Enden zweier starr miteinander gekoppelter Querträger 22 des ersten Transportsystems 20 verschiebbar in Querrichtung 102 gelagert. Von den beiden Querträgern 22 ragen zwei Holmenpaare 23 in vertikaler Richtung 103 in Richtung des Bearbeitungsrahmens 10 ab, die an ihren freien Enden jeweils eine nach oben gerichtete Aufnahme 24 aufweisen. Wenn der Befestigungsrahmen 10 in das Bezugssystem des ersten Transportsystems 20 eingekoppelt ist, liegen auf den Aufnahmen 24 Auflageflächen 13 der Halterungen 11 auf, wodurch die Halterungen 11 fixiert sind. Durch eine Bewegung der Querträger 22 entlang der Querrichtung 102 (in den Laufschienen 21) kann der eingekoppelte Bearbeitungsrahmen 10 zwischen der in Richtung der Förderlinie 100 verschobenen Gebrauchsposition, in welcher der Bearbeitungsrahmen 10 mit der Fahrzeugkarosserie 2 zur Bearbeitung derselben in Eingriff ist und sich die erste Hängeschiene 51 in einer Arbeitsposition befindet, und einer von der Förderlinie 100 in Querrichtung 102 zurückversetzten Übergabeposition, in welcher sich die erste Hängeschiene 51 in einer Ladestellung befindet und eine Übergabe des Bearbeitungsrahmens 10 zwischen dem ersten und dem zweiten Transportsystem 20, 30 stattfinden kann, verfahren werden. Die Arbeits- und Gebrauchsposition ist in Figur 2 dargestellt, während die Lade- und Übergabeposition in Figur 3 illustriert ist.

Die Bearbeitungsanlage 1 weist eine Übergabeeinheit 40 auf, welche zur Übergabe des Bearbeitungsrahmens 10 zwischen dem ersten und dem zweiten Transportsystem 20, 30 dient. Die Übergabeeinheit 40 umfasst eine Hubeinheit in Form von zwei drehbaren Nocken 41, die zwischen den beiden Querträgern 22 befestigt sind. An den freien Enden der beiden Nocken 41 ist mittelbar ein Segment des Hängeschienensystems 50 des ersten Transportsystems 20 in Form einer ersten Hängeschiene 51 befestigt. In dieser ersten Hängeschiene 51 greifen wiederum die Räder 12 der Halterungen 11 des Bearbeitungsrahmens 10 ein. Mittels der Übergabeeinheit 40 kann die erste Hängeschiene 51 somit in vertikaler Richtung 103 bewegt werden.

Wenn der Bearbeitungsrahmen 10 in das Bezugssystem des ersten Transportsystems 20 eingekoppelt ist, ist die erste Hängeschiene 51 in einer durch die Nocken 41 abgesenkten Position, so dass die Auflageflächen 13 der Halterungen 11 auf den Aufnahmen 24 aufliegen. Die Position des Bearbeitungsrahmens 10 wird durch die Aufnahmen 24 bestimmt, so dass das zweite Transportsystem 30 und insbesondere die abgesenkte erste Hängeschiene 51 keinen Einfluss auf die Positionierung des Bearbeitungsrahmens 10 hat. Bei der Übergabe des Bearbeitungsrahmens 10 vom ersten Transportsystem 20 an das zweite Transportsystem 30 zum Auswechseln des Bearbeitungsrahmens 10, weil beispielsweise ein anderer Karosserietyp geschweißt werden soll, wird die erste Hängeschiene 51 mittels der beiden Nocken 41 angehoben, so dass die Auflageflächen 13 außer Eingriff mit den Aufnahmen 24 gelangen. Die Halterungen 11 hängen dann nur noch an der ersten Hängeschiene 51, so dass der Bearbeitungsrahmen 10 aus dem Bezugssystem des ersten Transportsystems 20 ausgekoppelt ist und die Position des Bearbeitungsrahmens 10 nur noch durch das zweite Transportsystem 20 bestimmt wird. Die Nocken 41 bzw. die Übergabeeinheit 40 heben die erste Hängeschiene 51 soweit an, dass die Hängeschiene 51 stirnseitig in Flucht mit einer zweiten Hängeschiene 52 des zweiten Transportsystems 30 gelangt. Die als Laufkatzen ausgebildeten Halterungen 11 können somit von der ersten Hängeschiene 51 auf die zweite Hängeschiene 52 verschoben werden, so dass der Bearbeitungsrahmen 10 von der ersten Hängeschiene 51 entfernt werden kann und auch das erste Transportsystem 20 entladen wird. Auf einer der ersten Hängeschiene 51 parallel zur Förderrichtung 101 abgewandten Seite der zweiten Hängeschiene 52 ist eine dritte Hängeschiene 53 des Speichersystems 60 angeordnet, auf welches die Halterungen 11 über die zweite Hängeschiene 52 gefahren werden können, um den Bearbeitungsrahmen 10 von der Übergabeposition in die Nichtgebrauchsposition zu verfahren. Das Speichersystem 60 weist im vorliegenden Beispiel drei in Förderrichtung 101 parallel zueinander angeordnete dritte Hängeschienen 53 auf, welche in Querrichtung 102 zueinander versetzt sind. Die dritten Hängeschienen 53 sind ferner über weitere Laufschienen 55 in Querrichtung 102 bewegbar, so dass je nach Stellung der dritten Hängeschienen 53 wahlweise eine der drei Hängeschienen 53 in eine mit der zweiten Hängeschiene 52 fluchtende Position zu bringen ist. Der Bearbeitungsrahmen 10 kann somit je nach gewünschtem Speicherort unter eine der drei Hängeschienen 53 gehängt werden. Die Positionierung der Hängeschienen 51, 52, 53 braucht anders als bei den Laufschienen 21 nicht mit hoher Präzision erfolgt, da die Hängeschienen 51, 52, 53 vom Bezugssystem des ersten Transportsystems 20 entkoppelt sind.

Um die Bearbeitungsstation 3 nun mit einem anderen Bearbeitungsrahmen 10, welcher auf die zu verarbeitende Karosserie angepasst ist, zu bestücken, werden die dritten Hängeschienen 53 in Querrichtung 103 derart verfahren, dass diejenige dritte Hängeschiene 53 in eine mit der zweiten Hängeschiene 52 fluchtende Position gelangt, die den gewünschten benötigten Bearbeitungsrahmen 10 aufweist. Anschließend wird der Bearbeitungsrahmen 10, beispielsweise mittels eines entsprechenden auf den Hängeschienen 51, 52, 53 verfahrbaren und mit einer der Halterungen 11 koppelbaren Antriebsmittels, von der dritten Hängeschiene 53 über die zweite Hängeschiene 52 auf die erste Hängeschiene 51 verfahren. Anschließend wird die erste Hängeschiene 51 über die drehbaren Nocken 41 parallel zur vertikalen Richtung 103 abgesenkt, so dass die Auflageflächen 13 der Halterungen 11 in einen formschlüssigen Kontakt mit den Aufnahmen 24 der Holmenpaare 23 gelangen. Mittels der Übergabeeinheit 40 wird der Bearbeitungsrahmen 10 somit in das Bezugssystem des ersten Transportsystems 20 eingekoppelt. Anschließend werden die Querträger 22 in Richtung der Förderlinie 100 entlang der Querrichtung 102 verfahren, so dass der Bearbeitungsrahmen 10 in die Gebrauchsposition gelangt. Anschließend können die Bearbeitungswerkzeuge 4 entlang der Querrichtung 102 an die Fahrzeugkarosserie 2 herangefahren werden.

Die Bearbeitungsanlage 1 weist ferner Positioniermittel auf, welche in der Übergabeposition beim Absenken der ersten Hängeschiene 51 eine Ausrichtung des Bearbeitungsrahmens 10 unter Ausnutzung der Eigenmasse des Bearbeitungsrahmens 10 bewirken. Die Positioniermittel umfassen Kulissenführungen 25 mit Führungsschrägen, welche beim Absenken der Auflageflächen 13 auf die Aufnahmen 24 die Positionen der Halterungen 11 in der horizontalen Ebene, d.h. parallel zur Förderrichtung 101 und parallel zur Querrichtung 102, festlegen bzw. korrigieren. Zur Korrektur der Position entlang der vertikalen Richtung 103 weist die Bearbeitungsanlage 1 Federmittel 26 auf, welche entlang der vertikalen Richtung 103 auslenkbar sind und ein "Einschwimmen" des Bearbeitungsrahmens 10 in das Bezugssystem des ersten Transportsystems 20 erlauben.

Die Bearbeitungsanlage 1 weist optional eine Austauschschiene 54 (siehe Figur 2) auf, welche in Querrichtung 102 verfahrbar ist. Entlang der Querrichtung 102 sind die Querträger 22 zwischen der Förderlinie 100 und der Austauschschiene 54 angeordnet. Denkbar ist, dass die Austauschschiene 54 in verlängerte Laufschienen 21 verschiebbar gelagert ist. Wenn die Querträger 22 in Richtung der Förderrichtung 100 verfahren sind, so dass sich der mittels der ersten Hängeschiene 51 mittelbar gekoppelte Bearbeitungsrahmen 10 in der Gebrauchsposition befindet, kann die Austauschschiene 54 in eine mit den beiden zweiten Hängeschienen 52 fluchtende Position gefahren werden, so dass über die Austauschschiene 54 ein Austausch von Bearbeitungsrahmen 10 zwischen den auf beiden Seiten der Austauschschiene 54 angeordneten dritten Hängeschienen 53 durchgeführt werden kann. Auf diese Weise kann die Anordnung der in der Nichtgebrauchsposition geparkten Bearbeitungsrahmen 10 neu sortiert werden, während die Bearbeitungsstation 3 eine Bearbeitung von Fahrzeugkarosserien 2 vornimmt.

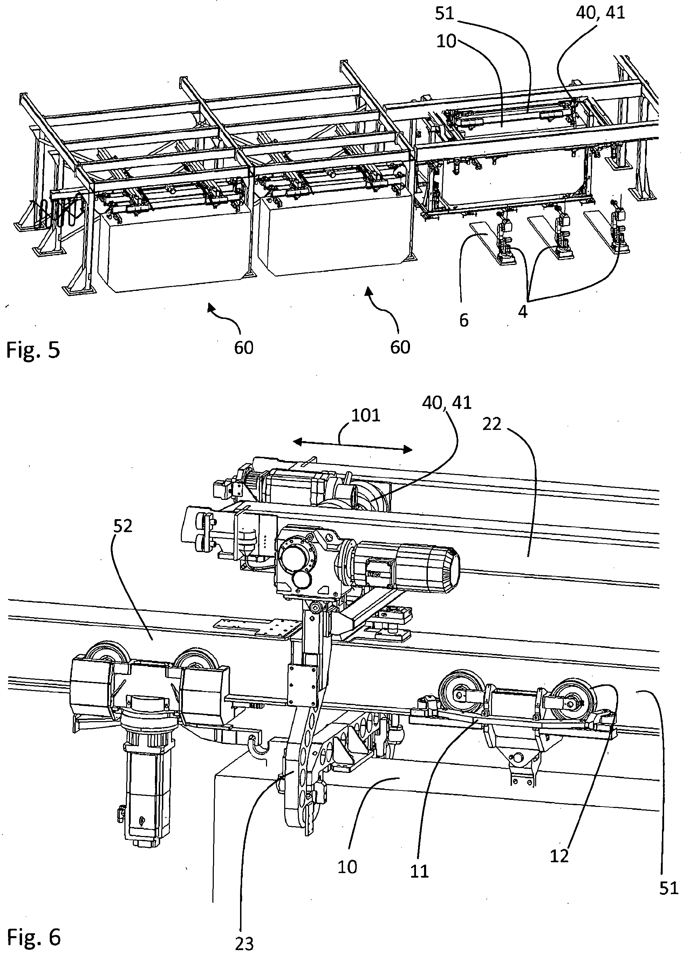

Die in Figuren 1, 2, 3 und 4 gezeigte Bearbeitungsanlage 1 ist mit einem Speichersystem 60 ausgestattet, welches auf beiden Seiten der in der Übergabeposition angeordneten ersten Hängeschiene 51 jeweils eine zweite Hängeschiene 52, sowie drei dritte Hängeschienen 53 umfasst, so dass in beide Richtungen ein Entladen und Beladen der Bearbeitungsstation 3 ermöglicht wird. Insgesamt können mit diesem Speichersystem 60 auf einer Seite der Förderlinie 100 bis zu sechs Bearbeitungsrahmen 10 in Nichtgebrauchspositionen geparkt werden. Das Speichersystem 60 ist jedoch modular erweiterbar und kann somit auf die Anzahl der iri der Förderlinie 100 vorkommenden Karosserietypen individuell angepasst werden. Denkbar ist, dass mehr als drei dritte Hängeschienen 53 vorgesehen werden oder dass hinter den dritten Hängeschienen 53 ein Modul mit mehreren vierten Hängeschienen angeordnet wird. Die Bearbeitungsrahmen 10 könnten dann über die dritten Hängeschienen 53 auf die vierten Hängeschienen verfahren werden. Eine solche Ausführungsform ist als zweite Ausführungsform beispielhaft in **Figur 5** illustriert.

In Figuren 1, 2, 3 und 4 ist zu erkennen, dass die Bearbeitungsanlage 1 auf beiden Seiten der Förderlinie 100 ein gleichartiges und gegenüber der Förderlinie 100 spiegelbildlich aufgebautes System zum Bewegen der Bearbeitungsrahmen 10 zwischen einer Gebrauchsposition, einer Nichtgebrauchsposition und einer Übergabeposition aufweist. Auf beiden Seite der Förderlinie 100 ist somit ein erstes Transportsystem 20, ein zweites Transportsystem 30, eine Übergabeeinheit 40 und ein Speichersystem 60 installiert, so dass auf beiden Seite der zu bearbeitenden Fahrzeugkarosserien 2 individuell angepasste Bearbeitungsrahmen 10 verwendet werden können.

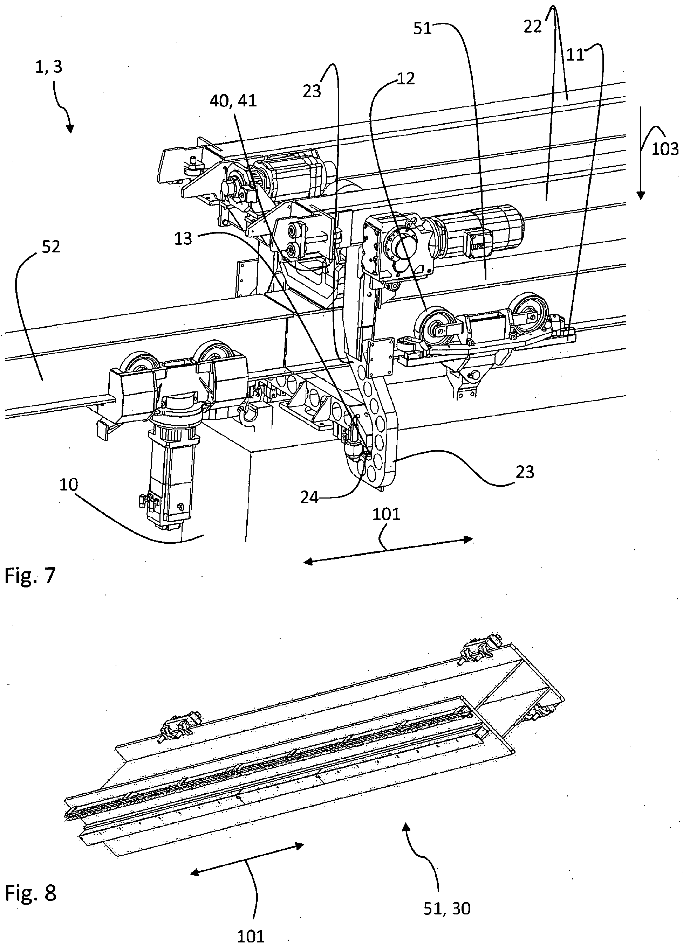

In **Figuren 6** **und** **7** sind schematische Detailansichten der Bearbeitungsanlage 1 gemäß der beispielhaften ersten Ausführungsform der vorliegenden Erfindung dargestellt. In diesen Detailansichten sind die Übergabeeinheit 40, die erste Hängeschiene 51 und die Halterungen 11 perspektivisch illustriert. In Figur 6 sind die Halterungen 11 in das Bezugssystem des ersten Transportsystems 20 nicht eingekoppelt, da die Auflageflächen 13 der Halterungen 11 nicht auf den Aufnahmen 24 der Holme 23 aufliegen. Die erste Hängeschiene 51 befindet sich in einem angehobenen Zustand, der Bearbeitungsrahmen hängt mittels der Räder 12 der Halterungen 11 an der ersten Hängeschiene 51. Auch in Figur 7 sind die Halterungen 11 aus dem Bezugssystem des ersten Transportsystems 20 ausgekoppelt, da auch hier die erste Hängeschiene 51 mittels der Nocken 41 der Übergabeeinheit 40 angehoben ist und die Auflageflächen 13 daher außer Kontakt mit den Aufnahmen 24 sind. Das Gewicht des Bearbeitungsrahmens 10 hängt somit über die Räder 12 an der ersten Hängeschiene 51. Die erste Hängeschiene 51 fluchtet in dieser Position mit den beidseitig angeordneten zweiten Hängeschienen 52, so dass die Halterungen 11 zusammen mit dem Bearbeitungsrahmen 10 in das Speichersystem 60 verfahren werden kann.

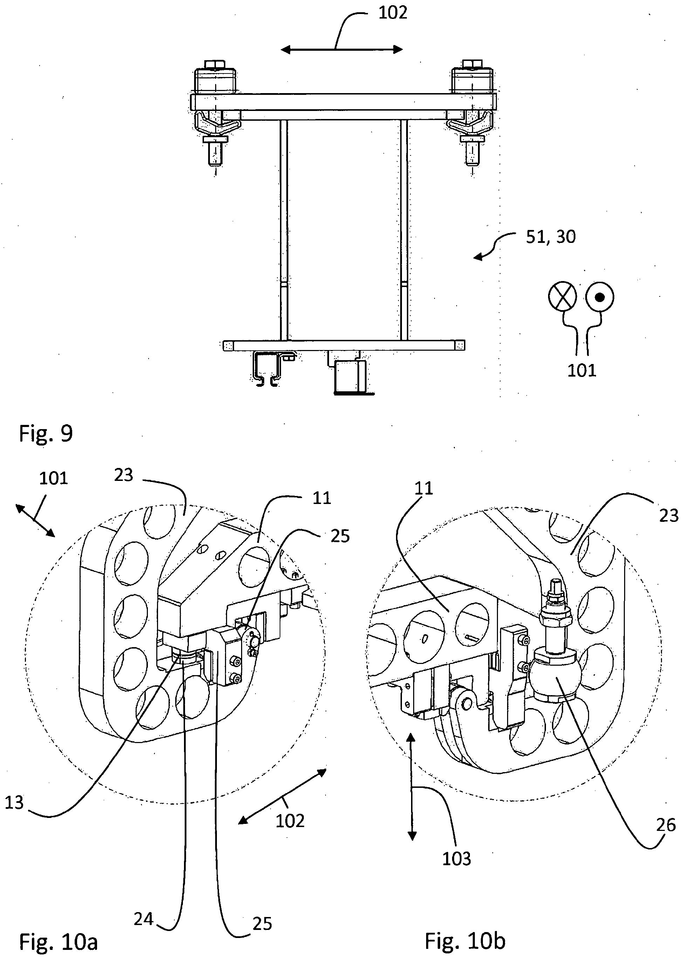

In **Figuren 8** **und** **9** sind schematische Ansichten der ersten Hängeschiene 51 der Bearbeitungsanlage 1 gemäß der beispielhaften ersten Ausführungsform der vorliegenden Erfindung dargestellt. Es ist zu sehen, dass der Querschnitt der ersten Hängeschiene 51 einen Doppel-T-Träger umfasst, der ein inneres Hohlprofil aufweist.

In **Figuren 10a und 10b** sind schematische Detailansichten der Holme 23, Halterungen 11 und Positioniermittel der Bearbeitungsanlage 1 gemäß der beispielhaften ersten Ausführungsform der vorliegenden Erfindung dargestellt. In den Figuren 10a und 10b ist jeweils die Auflagefläche 13 in formschlüssigen Kontakt mit der Aufnahme 24 dargestellt. In Figur 10a ist zu sehen, dass die Bearbeitungsanlage 1 Positioniermittel in Form von Kulissenführungen 25 aufweist, welche beim Absenken der Halterung 11 auf die Aufnahme 24 der Holme 23 durch die Übergabeeinheit 40 die Position der Halterung 11 in der horizontalen Ebene, d.h. parallel zur Querrichtung 102 und parallel zur Förderrichtung 101, festlegen. Ferner weist die Bearbeitungsanlage 1 ein als Federmittel 26 ausgebildetes Positioniermittel auf, welches in Figur 10b illustriert ist und die Positionierung der Halterung 11 entlang der vertikalen Richtung 103 festlegt.

### BEZUGSZEICHENLISTE

- 1: Bearbeitungsanlage
- 2: Baueinheiten
- 3: Bearbeitungsstation
- 4: Bearbeitungswerkzeuge
- 6: Bodenschiene
- 10: Bearbeitungsrahmen
- 11: Halterung
- 12: Rollen
- 13: Auflageflächen
- 20: Erstes Transportsystem
- 21: Laufschiene
- 22: Querträger
- 23: Holme
- 24: Aufnahme
- 25: Kulissenführung
- 26: Federmittel
- 30: Zweites Transportsystem
- 40: Übergabeeinheit
- 41: Nocken
- 50: Hängeschienensystem
- 51: Erste Hängeschiene
- 52: Zweite Hängeschiene
- 53: Dritte Hängeschiene
- 54: Austauschschiene
- 55: Weitere Laufschiene
- 60: Speichersystem
- 70: Komponenten
- 100: Förderlinie
- 101: Förderrichtung
- 102: Querrichtung
- 103: Vertikale Richtung

## Patentansprüche

1. Bearbeitungsanlage (1) für Baueinheiten (2), insbesondere Fahrzeugkarosserien, aufweisend eine Bearbeitungsstation (3), in welche eine zu bearbeitende Baueinheit (2') einbringbar ist, und wenigstens einen Bearbeitungsrahmen (10), welcher in einer Gebrauchsposition mit der in die Bearbeitungsstation (3) eingebrachten Baueinheit (2') in Eingriff bringbar ist, wobei die Bearbeitungsanlage (1) ein erstes Transportsystem (20) zum Verfahren des Bearbeitungsrahmens (10) zwischen der Gebrauchsposition und der Übergabeposition aufweist und wobei die Bearbeitungsanlage (1) ein zweites Transportsystem (30) zum Verfahren des Bearbeitungsrahmens (10) zwischen der Übergabeposition und einer Nichtgebrauchsposition aufweist, wobei die Bearbeitungsanlage (1) eine Übergabeeinheit (40) aufweist, welche den Bearbeitungsrahmen (10) in der Übergabeposition vom ersten Transportsystem (20) entkoppelt und an das zweite Transportsystem (30) übergibt oder vom zweiten Transportsystem (30) entkoppelt und an das erste Transportsystem (20) übergibt,
**dadurch gekennzeichnet, dass**
das erste und/oder zweite Transportsystem (20, 30) ein Hängeschienensystem (50) umfasst, an welchem der Bearbeitungsrahmen (10) hängend und verschiebbar befestigt ist, wobei das zweite Transportsystem (30) eine erste Hängeschiene (51) des Hängeschienensystems (50) aufweist, wobei der Bearbeitungsrahmen (10) längsverschieblich und austauschbar an der ersten Hängeschiene (51) aufgehängt ist, wobei mittels des ersten Transportsystems (20) die erste Hängeschiene (51) zwischen einer Arbeitsposition, in welcher der Bearbeitungsrahmen (10) in der Gebrauchsposition angeordnet ist, und einer Ladeposition, in welcher die Hängeschiene (10) mit einem Bearbeitungsrahmen (10) zu beladen oder zu entladen ist, bewegbar ist, wobei die Bearbeitungsanlage (1) derart ausgebildet ist, dass eine Übergabe des Bearbeitungsrahmens (10) von dem zweiten Transportsystem (30) an das erste Transportsystem (20) derart erfolgt, dass in der Arbeitsposition die Position des Bearbeitungsrahmens (10) durch das erste Transportsystem (20) bestimmt wird.

2. Bearbeitungsanlage (1) nach einem der vorhergehenden Ansprüche, wobei das erste Transportsystem (20) wenigstens zwei zur ersten Hängeschiene (51) senkrecht verlaufende Laufschienen (21) umfasst, an welchen die erste Hängeschiene (51) in einer zu den Laufschienen (21) parallelen Richtung verschiebbar aufgehängt ist.

3. Bearbeitungsanlage (1) nach Anspruch 2, wobei die erste Hängeschiene (51) mittels der Übergabeeinheit (40) an den wenigstens zwei Laufschienen (21) aufgehängt ist und wobei die erste Hängeschiene (51) mittels der Übergabeeinheit (40) entlang einer vertikalen Richtung bewegbar ist.

4. Bearbeitungsanlage (1) nach Anspruch 3, wobei die Übergabeeinheit (40) wenigstens eine Hubeinheit umfasst, an welchem die erste Hängeschiene (51) befestigt ist, wobei der Befestigungsrahmen (10) oder eine Halterung (11) des Befestigungsrahmens (10) durch eine entsprechende Betätigung der Hubeinheit in Kontakt oder außer Kontakt mit einer Aufnahme (24) des ersten Transportsystems (20) zu bringen ist, wobei die Hubeinheit vorzugsweise einen drehbaren Nocken (41) umfasst

5. Bearbeitungsanlage (1) nach einem der Ansprüche 2 bis 4, wobei das erste Transportsystem (20) einen Querträger (22) umfasst, dessen Ende verschiebbar in den Laufschienen (21) geführt sind, wobei der Querträger (22) in vertikaler Richtung zum Bearbeitungsrahmen (10) vorstehende Holmenpaare (23) aufweist, an welchen Aufnahmen (24) für eine Halterung (11) des Befestigungsrahmens (10) ausgebildet sind, wobei die erste Hängeschiene (51) parallel zum Querträger (22) zwischen den Holmenpaaren (23) verlaufend angeordnet ist.

6. Bearbeitungsanlage (1) nach einem der vorhergehenden Ansprüche, wobei die Bearbeitungsanlage (1) ein Speichersystem (60) zur Aufnahme von Bearbeitungsrahmen (10) in Nichtgebrauchspositionen aufweist, wobei das Speichersystem (60) wenigstens eine zweite Hängeschiene (52) umfasst und wobei die erste Hängeschiene (51) in der Ladeposition mittels der Übergabeeinheit (40) in Flucht mit der zweiten Hängeschiene (52) bringbar ist, wenn der Befestigungsrahmen (10) oder die Halterung (11) außer Kontakt mit der Aufnahme (24) des ersten Transportsystems (20) gebracht ist, wobei in der fluchtenden Position der Bearbeitungsrahmen (10) von der ersten Hängeschiene (51) auf die zweite Hängeschiene (52) oder von der zweiten Hängeschiene (52) auf die erste Hängeschiene (51) verschiebbar ist.

7. Bearbeitungsanlage (1) nach einem der vorhergehenden Ansprüche, wobei der Bearbeitungsrahmen (10) mittels einer Halterung (11) gehalten wird, wobei die Halterung (11) als eine am Hängeschienensystem (50) beweglich aufgehängte Laufkatze ausgebildet ist.

8. Bearbeitungsanlage (1) nach einem der vorhergehenden Ansprüche, wobei das Speichersystem (60) dritte Hängeschienen (53) umfasst, wobei die zweite Hängeschiene (52) und/oder die dritten Hängeschienen (53) senkrecht zu ihren axialen Erstreckungsrichtungen derart bewegbar sind, dass die zweite Hängeschiene (52) wahlweise in Flucht mit jeder der dritten Hängeschienen (53) zu bringen ist.

## Claims

1. Machining plant (1) for constructional units (2), in particular vehicle bodies, having a machining station (3) into which a constructional unit (2') to be machined can be brought, and at least one machining frame (10) which, in a use position, can be brought into engagement with the constructional unit (2') brought into the machining station (3), wherein the machining plant (1) has a first transport system (20) for moving the machining frame (10) between the use position and the transfer position, and wherein the machining plant (1) has a second transport system (30) for moving the machining frame (10) between the transfer position and a non-use position, wherein the machining plant (1) has a transfer unit (40) which, in the transfer position, decouples the machining frame (10) from the first transport system (20) and transfers same to the second transport system (30), or decouples the machining frame (10) from the second transport system (30) and transfers same to the first transport system (20), **characterized in that**
the first and/or second transport system (20, 30) comprise/comprises a hanging rail system (50) to which the machining frame (10) is fastened in a hanging and displaceable manner, wherein the second transport system (30) has a first hanging rail (51) of the hanging rail system (50), wherein the machining frame (10) is suspended in a longitudinally displaceable and interchangeable manner on the first hanging rail (51), wherein, by means of the first transport system (20), the first hanging rail (51) is movable between a working position, in which the machining frame (10) is arranged in the use position, and a loading position, in which a machining frame (10) can be loaded onto or unloaded from the hanging rail (10), wherein the machining plant (1) is designed in such a manner that a transfer of the machining frame (10) from the second transport system (30) to the first transport system (20) takes place in such a manner that, in the working position, the position of the machining frame (10) is determined by the first transport system (20).

2. Machining plant (1) according to one of the preceding claims, wherein the first transport system (20) comprises at least two running rails (21) which run perpendicularly to the first hanging rail (51) and on which the first hanging rail (51) is suspended so as to be displaceable in a direction parallel to the running rails (21).

3. Machining plant (1) according to Claim 2, wherein the first hanging rail (51) is suspended on the at least two running rails (21) by means of the transfer unit (40), and wherein the first hanging rail (51) is movable along a vertical direction by means of the transfer unit (40).

4. Machining plant (1) according to Claim 3, wherein the transfer unit (40) comprises at least one lifting unit to which the first hanging rail (51) is fastened, wherein the fastening frame (10) or a holder (11) of the fastening frame (10) can be brought into contact or out of contact with a receptacle (24) of the first transport system (20) by a corresponding actuation of the lifting unit, wherein the lifting unit preferably comprises a rotatable cam (41).

5. Machining plant (1) according to one of Claims 2 to 4, wherein the first transport system (20) comprises a cross member (22), the ends of which are guided displaceably in the running rails (21), wherein the cross member (22) has pairs of struts (23) which project in the vertical direction with respect to the machining frame (10) and on which receptacles (24) for a holder (11) of the fastening frame (10) are formed, wherein the first hanging rail (51) is arranged running parallel to the cross member (22) between the pairs of struts (23).

6. Machining plant (1) according to one of the preceding claims, wherein the machining plant (1) has a storage system (60) for receiving machining frames (10) in non-use positions, wherein the storage system (60) comprises at least one second hanging rail (52), and wherein, in the loading position, the first hanging rail (51) can be brought into alignment with the second hanging rail (52) by means of the transfer unit (40) when the fastening frame (10) or the holder (11) is brought out of contact with the receptacle (24) of the first transport system (20), wherein, in the aligned position, the machining frame (10) is displaceable from the first hanging rail (51) onto the second hanging rail (52) or from the second hanging rail (52) onto the first hanging rail (51).

7. Machining plant (1) according to one of the preceding claims, wherein the machining frame (10) is held by means of a holder (11), wherein the holder (11) is designed as a trolley suspended movably on the hanging rail system (50).

8. Machining plant (1) according to one of the preceding claims, wherein the storage system (60) comprises third hanging rails (53), wherein the second hanging rail (52) and/or the third hanging rails (53) are movable perpendicularly to the axial directions of extent thereof in such a manner that the second hanging rail (52) can be selectively brought into alignment with each of the third hanging rails (53).

## Revendications

1. Installation d'usinage (1) pour unités de construction (2), en particulier des carrosseries de véhicules, présentant un poste d'usinage (3), dans lequel peut être introduite une unité de construction à usiner (2'), et au moins un cadre d'usinage (10) qui, dans une position d'utilisation, peut être amené en prise avec l'unité de construction (2') introduite dans le poste d'usinage (3), l'installation d'usinage (1) présentant un premier système de transport (20) pour déplacer le cadre d'usinage (10) entre la position d'utilisation et la position de transfert et l'installation d'usinage (1) présentant un deuxième système de transport (30) pour déplacer le cadre d'usinage (10) entre la position de transfert et une position de non utilisation, l'installation d'usinage (1) présentant une unité de transfert (40) qui, dans la position de transfert, désaccouple le cadre d'usinage (10) du premier système de transport (20) et le transfère au deuxième système de transport (30) ou le désaccouple du deuxième système de transport (30) et le transfère au premier système de transport (20), caractérisée ce que
le premier et/ou le deuxième système de transport (20, 30) comprennent un système de rail d'accrochage (50) auquel le cadre d'usinage (10) est fixé par accrochage de manière déplaçable, le deuxième système de transport (30) présentant un premier rail d'accrochage (51) du système de rail d'accrochage (50), le cadre d'usinage (10) étant accroché de manière déplaçable en longueur et de manière remplaçable au premier rail d'accrochage (51), le premier rail d'accrochage (51) pouvant être déplacé au moyen du premier système de transport (20) entre une position de travail dans laquelle le cadre d'usinage (10) est disposé dans la position d'utilisation et une position de chargement dans laquelle le rail d'accrochage (10) doit être chargé ou déchargé avec un cadre d'usinage (10), l'installation d'usinage (1) étant réalisée de telle sorte qu'un transfert du cadre d'usinage (10) du deuxième système de transport (30) au premier système de transport (20) se produise de telle sorte que dans la position de travail, la position du cadre d'usinage (10) soit déterminée par le premier système de transport (20).

2. Installation d'usinage (1) selon l'une quelconque des revendications précédentes, dans laquelle le premier système de transport (20) comprend au moins deux rails de roulement (21) s'étendant perpendiculairement par rapport au premier rail d'accrochage (51), auxquels est accroché le premier rail d'accrochage (51) de manière déplaçable dans une direction parallèle aux rails de roulement (21).

3. Installation d'usinage (1) selon la revendication 2, dans laquelle le premier rail d'accrochage (51) est accroché au moyen de l'unité de transfert (40) aux au moins deux rails de roulement (21) et dans laquelle le premier rail d'accrochage (51) peut être déplacé le long d'une direction verticale au moyen de l'unité de transfert (40).

4. Installation d'usinage (1) selon la revendication 3, dans laquelle l'unité de transfert (40) comprend au moins une unité de levage à laquelle est fixé le premier rail d'accrochage (51), le cadre de fixation (10) ou une fixation (11) du cadre de fixation (10) devant être amené(e) par un actionnement correspondant de l'unité de levage en contact ou hors de contact avec un logement (24) du premier système de transport (20), l'unité de levage comprenant de préférence une came rotative (41).

5. Installation d'usinage (1) selon l'une quelconque des revendications 2 à 4, dans laquelle le premier système de transport (20) comprend une traverse (22) dont les extrémités sont guidées de manière déplaçable dans les rails de roulement (21), la traverse (22) présentant dans la direction verticale des paires de longerons (23) faisant saillie vers le cadre d'usinage (10), au niveau desquelles sont réalisés des logements (24) pour une fixation (11) du cadre de fixation (10), le premier rail d'accrochage (51) étant disposé de manière à s'étendre parallèlement à la traverse (22) entre les paires de longerons (23).

6. Installation d'usinage (1) selon l'une quelconque des revendications précédentes, dans laquelle l'installation d'usinage (1) présente un système de stockage (60) pour recevoir le cadre d'usinage (10) dans des positions de non utilisation, le système de stockage (60) comprenant au moins un deuxième rail d'accrochage (52) et le premier rail d'accrochage (51) pouvant être amené, dans la position de chargement, en affleurement avec le deuxième rail d'accrochage (52) au moyen de l'unité de transfert (40), lorsque le cadre de fixation (10) ou la fixation (11) est amené(e) hors de contact avec le logement (24) du premier système de transport (20), le cadre d'usinage (10), dans la position en affleurement, pouvant être déplacé du premier rail d'accrochage (51) au deuxième rail d'accrochage (52) ou du deuxième rail d'accrochage (52) au premier rail d'accrochage (51).

7. Installation d'usinage (1) selon l'une quelconque des revendications précédentes, dans laquelle le cadre d'usinage (10) est retenu au moyen d'une fixation (11), la fixation (11) étant réalisée sous la forme d'un chariot roulant accroché de manière déplaçable au système de rail d'accrochage (50).

8. Installation d'usinage (1) selon l'une quelconque des revendications précédentes, dans laquelle le système de stockage (60) comprend des troisièmes rails d'accrochage (53), le deuxième rail d'accrochage (52) et/ou les troisièmes rails d'accrochage (53) pouvant être déplacés perpendiculairement à leur direction d'étendue axiale de telle sorte que le deuxième rail d'accrochage (52) puisse être amené de manière sélective en affleurement avec chacun des troisièmes rails d'accrochage (53).
